# EUROPÄISCHE PATENTSCHRIFT

(11) **EP 0 991 878 B1**
(45) Veröffentlichungstag und Bekanntmachung des Hinweises auf die Patenterteilung: **09.05.2001**
(21) Anmeldenummer: 98939545.4
(22) Anmeldetag: 27.06.1998
(51) Int. Cl.: F16H 37/08

(54) **STUFENLOSES GETRIEBE**
CONTINUOSLY VARIABLE TRANSMISSION
TRANSMISSION A REGLAGE CONTINU

(30) Priorität: 04.07.1997 DE 19728611
(43) Veröffentlichungstag der Anmeldung: 12.04.2000
(73) Patentinhaber: ZF FRIEDRICHSHAFEN Aktiengesellschaft, 88038 Friedrichshafen (DE)
(72) Erfinder: BAUR, Erwin, D-88046 Friedrichshafen (DE); MÜLLER, Franz, D-88045 Friedrichshafen (DE); KONRAD, Helmut, D-88362 Aulendorf (DE)
(86) Internationale Anmeldenummer: EP9803937
(87) Internationale Veröffentlichungsnummer: WO9901681

(56) Entgegenhaltungen:
- EP-A- 0 185 463
- EP-A- 0 308 078
- EP-A- 0 748 954
- WO-A-95/14183
- DE-A- 1 625 030
- DE-A- 3 929 209
- DE-A- 4 308 761
- DE-A- 19 631 294
- PATENT ABSTRACTS OF JAPAN vol. 016, no. 569 (M-1343), 9. Dezember 1992 & JP 04 219557 A (MAZDA MOTOR CORP), 10. August 1992

## Beschreibung

Die Erfindung betrifft ein stufenloses Getriebe mit den Merkmalen nach dem Oberbegriff des Anspruchs 1.

Ein gattungsgemäßes stufenloses Getriebe ist in der US-Patentschrift 3 340 749 beschrieben. Dieses stufenlose Getriebe ist ein Leistungsverzweigungsgetriebe mit drei Fahrbereichen, mit einem als Umschlingungsgetriebe ausgebildeten Variator und zwei mechanischen Leistungszweigen. Über Kupplungen kann wahlweise ein mechanischer Leistungszweig trieblich mit der Antriebswelle verbunden werden. Der geschaltete mechanische Leistungszweig und der Leistungszweig mit stufenlos regelbarer Drehzahl des Umschlingungsgetriebes werden in einem als Summierungsgetriebe wirkenden Planetengetriebe zusammengeführt. Bei einem weiteren Fahrbereich werden beide mechanischen Leistungszweige trieblich von der Antriebswelle entkoppelt und mit einer weiteren Kupplung die Welle des Sekundärkegelscheibenpaares des Umschlingungsgetriebes direkt mit der Abtriebswelle verbunden. Damit wird die gesamte Leistung über das Umschlingungsgetriebe auf die Abtriebswelle übertragen.

Bei derartigen Getrieben wird bei Stillstand des Fahrzeuges der Variator in der Regel derart eingestellt, daß im Fahrbereich der langsamsten Geschwindigkeiten bei endlicher Getriebeeingangsdrehzahl die Getriebeausgangsdrehzahl Null ist. Zum Anfahren wird noch im Stillstand die Kupplung dieses langsamsten Fahrbereichs geschlossen. Der Anfahrvorgang erfolgt durch Verstellen des Variators. Damit erhöht sich im Summierungsgetriebe die Getriebeausgangsdrehzahl. Eine geringfügige Verstellung des Variators hat eine deutliche Änderung der Gesamtübersetzung zur Folge. Dadurch gestaltet sich ein geregeltes Anfahren äußerst schwierig. Insbesondere ein behutsames Rangieren ist regelungstechnisch kaum zu meistern. In diesem Bereich sehr geringer Getriebeausgangsdrehzahlen bei endlichen Getriebeeingangsdrehzahlen ist das Drehmoment am Variator deutlich höher als das Drehmoment am Getriebeausgang. Der Variator wird damit mit einem sehr hohen Drehmoment belastet, mit einem deutlich höheren Drehmoment als bei direktem Antrieb über den Variator ohne Leistungsverzweigung.

Diese schwierige Regelbarkeit des Getriebes beim Anfahren und die hohe Drehmomentbelastung des Variators stellen einen erheblichen Nachteil dar.

Der Erfindung liegt die Aufgabe zugrunde, ein stufenloses Getriebe zu schaffen, bei dem das Anfahren und Reversieren leicht zu regeln ist und hohe Drehmomente am Variator vermieden werden.

Diese Aufgabe wird mit einem, auch die kennzeichnenden Merkmale des Hauptanspruchs aufweisenden, gattungsgemäßen stufenlosen Getriebe gelöst.

Das erfindungsgemäße stufenlose Getriebe ist ein Leistungsverzweigungsgetriebe mit einem Leistungszweig mit stufenlos regelbarer Drehzahl in Form eines Variators und mit einem mechanischen Leistungszweig. Es weist zwei Fahrbereiche auf. Im ersten Fahrbereich wird der mechanische Leistungszweig über eine Kupplung K1 mit einem als Summierungsgetriebe wirkenden Planetengetriebe trieblich verbunden. Die Sekundärseite des Variators ist fest mit dem Summierungsgetriebe verbunden. In dem zweiten Fahrbereich verbindet eine Kupplung K2 bei geöffneter Kupplung K1, d. h. bei offenem mechanischen Leistungszweig den Ausgang des Variators mit dem Ausgang des Planetengetriebes. Die beiden durch die Kupplungen K1 und K2 schaltbaren Fahrbereiche können wahlweise über eine Kupplung K_{V} für Vorwärtsfahrt und über eine Kupplung K_{R} für Rückwärtsfahrt im Antriebsstrang zur Vorwärts- bzw. Rückwärtsfahrt geschaltet werden. Diese Kupplungen K_{V} und K_{R} sind als Doppelkupplung ausgebildet. Diese Doppelkupplung ist im Antriebsstrang nach dem Variator und dem mechanischen Leistungszweig angeordnet dient als Anfahrkupplung und als Reversiereinheit. Diese Getriebeanordnung bietet den Vorteil, daß der Variator auch bei ausgekuppelter Doppelkupplung dreht und damit leicht zu verstellen ist. Eine Doppelkupplung ist vergleichsweise kostengünstig. Sie bietet den weiteren Vorteil, daß sich Schleppmomente, die vor allem bei viskosem Kupplungsöl infolge tiefer Temperaturen auftreten, gegenseitig aufheben. Solche Schleppmomente können, insbesondere wenn in dem Getriebe eine Kriechganggruppe geschaltet ist, leicht zum unbeabsichtigten Anrollen des Fahrzeuges führen. Kupplungen als Anfahrelemente sind leicht zu steuern oder zu regeln. Zur Steuerung oder Regelung von Kupplungen kann auf einen reichen Erfahrungsschatz zurückgegriffen werden. Auch Steuerungen zum Reversieren sind gut ausgereift. Ein behutsames Rangieren mit dem bewährten Konzept geregelter oder gesteuerter Anfahr- und Reversierkupplungen ist regelungstechnisch oder steuerungstechnisch unproblematisch. Die technischen Probleme der Anfahrregelung oder -steuerung dieser Leistungsverzweigungsgetriebe aus dem Stillstand durch Änderung der Variatoreinstellung sind damit beseitigt.

Vorzugsweise ist die Doppelkupplung derart stark dimensioniert, daß für beliebig eingestellte Übersetzungen im ersten Fahrbereich der Anfahr- oder Reversiervorgang ausschließlich über eine Betätigung dieser Doppelkupplung erfolgen kann, ohne daß dazu die Übersetzung verstellt werden muß. Die Steuerung des Reversiervorgangs beispielsweise kann damit alleine durch eine Steuerung der Doppelkupplung erfolgen, ohne daß die Variatoreinstellung verändert werden muß.

Vorzugsweise ist zwischen der Getriebeeingangswelle und dem Variator eine Übersetzungsstufe ins Schnelle angeordnet ist. Damit wird das Drehmoment am Variator reduziert und seine Lebensdauer erhöht.

Der Variator ist vorteilhafterweise als Umschlingungsgetriebe ausgebildet. In einer anderen vorteilhaften Ausgestaltung der Erfindung ist der Variator als Reibradgetriebe ausgebildet.

Dieses Getriebe kommt vorteilhaft in land- und forstwirtschaftlichen Nutzfahrzeugen zur Anwendung.

Abtriebsseitig der Doppelkupplung ist vorzugsweise eine Kriechganggruppe in Vorgelegebauweise angeordnet. Damit lassen sich sehr niedrige Geschwindigkeiten, wie sie z.B. bei einem Ackerschlepper im Setzeinsatz benötigt werden, sehr genau einstellen, ohne daß sehr hohe Anforderungen an die Regelgenauigkeit des Variators gestellt werden müssen.

Die Übersetzung ist derart ausgelegt, daß der Gesamtgetriebewirkungsgrad im am häufigsten benutzten Geschwindigkeits- und Zugkraftbereich optimal ist. Die Getriebespreizung im Fahrbereich mit Leistungsverzweigung ist größer als die Variatorspreizung. Dank der hohen Getriebespreizung sind zwei Fahrbereiche des stufenlosen Getriebes vollends ausreichend. Das Getriebe kann damit sehr einfach aufgebaut werden. Gegenüber Getrieben mit mehr Fahrbereichen können viele Bauteile für Verzahnungen, Kupplungen etc. eingespart werden. Dabei ist die Getriebeübersetzung derart ausgelegt, daß das auf den Variator wirkende maximale Drehmoment durch die Schlupfgrenze zwischen Reifen und Untergrund bzw. Fahrbahn begrenzt ist. Damit wird eine Überlastung des Variators vermieden.

Der Umschaltpunkt, an dem die Kupplung K1 geschlossen und die Kupplung K2 geöffnet wird bzw. umgekehrt, ist vorteilhaft derart gewählt, daß Sonnenrad, Hohlrad und Planetenträger des Summierungs-Planetengetriebes synchron umlaufen. Damit wird ein Zugkrafteinbruch oder eine Unterbrechung der Zugkraft verhindert.

Um das Problem der schwierigen Regelbarkeit und der großen Drehmomentüberhöhung zu vermeiden wird das Verhältnis von Getriebeabtriebsdrehzahl zu Antriebsdrehzahl der Vorgelegewelle bei endlicher Antriebsdrehzahl in einem vorteilhaften Verfahren größer als ein vorgegebener Minimalwert gewählt.

Das Anfahren und Reversieren ist beispielsweise ein häufiger Betriebszustand von landwirtschaftlichen Nutzfahrzeugen bei Arbeitseinsätzen wie Laden oder Stapeln. Ein ruppiges, sprunghaftes Anfahren und Reversieren mit unpräzis vorbestimmbaren Endlagen der Bewegung des Fahrzeuges, wie es bei Anfahrregelungen durch Hochregeln der Getriebeabtriebsdrehzahl von Null beginnend durch Verstellen des Variators vorkommen kann, kann zu Gefahrensituationen führen und ist damit untolerierbar. Das Anfahren erfolgt deshalb vorteilhaft durch gesteuertes oder geregeltes Schließen der Kupplung K_{V} bzw. K_{R}, das Reversieren durch eine gesteuerte oder geregelte Schaltung der Kupplungen K_{V} und K_{R}.

In einer vorteilhaften Ausgestaltung der Erfindung sind alle rotierenden Bauteile über dem Ölsumpf angeordnet. Damit werden Panschverluste vermieden und der Wirkungsgrad günstig gestaltet.

Vorzugsweise wird das Hydrauliköl für die Variatorverstellung und den Haltedruck der Kupplungen über eine sauggedrosselte Radialkolbenpumpe bereitgestellt. Dadurch wird die Verlustleistung des Getriebes durch die Pumpe begrenzt. Die Schmierölversorgung dagegen erfolgt vorteilhaft über eine Innenzahnradpumpe. Durch den Einsatz zweier unterschiedlicher Pumpen für Hydrauliköl und Schmieröl wird die Gesamtverlustleistung durch die Pumpen verringert.

Vorteilhaft regeln mechanische Drehmomentregler den Anpreßdruck im Variator. Mechanische Drehmomentregler reagieren unverzüglich auf Drehmomentspitzen und erhöhen den Anpreßdruck im Variator. Dadurch werden hohe Reibungsverluste vermieden, aber auch ein Schlupf bei Drehmomentspitzen, der nicht nur einen Gleitreibungsverlust darstellt, sondern auch den Variator verschleißt.

Das Getriebegehäuse besteht vorzugsweise einschließlich dem Hinterachsmittelteil aus drei Gehäuseteilen.

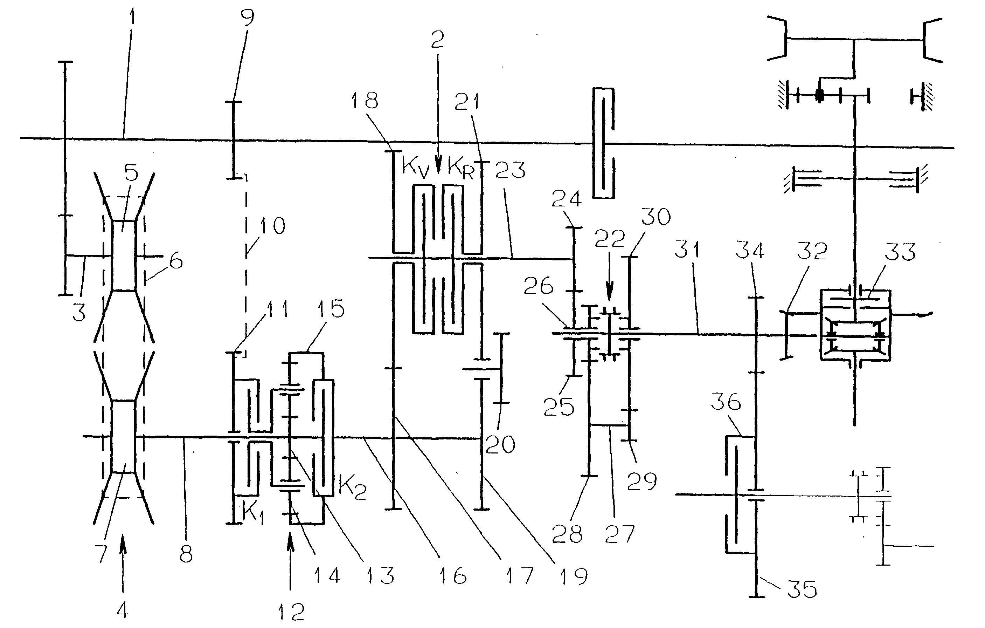

In einer Zeichnung ist ein Ausführungsbeispiel der Erfindung dargestellt.
- Die Figur: zeigt ein Leistungsverzweigungsgetriebe mit einer Doppelkupplung als Anfahr- und Reversiereinheit.

Ein nicht dargestellter Motor treibt das stufenlose Getriebe über eine Antriebswelle 1 an. Diese ist über Stirnräder mit einer Vorgelegewelle 3 trieblich verbunden. Diese Vorgelegewelle 3 treibt ein Leistungsverzweigungsgetriebe mit einem Leistungszweig mit stufenlos regelbarer Drehzahl in Form eines Variators und mit einem mechanischen Leistungszweig an. Der Variator ist als Umschlingungsgetriebe 4 ausgebildet, das aus einem Primärkegelscheibenpaar 5, einem Umschlingungsorgan 6 und einem Sekundärkegelscheibenpaar 7 besteht. Das Primärkegelscheibenpaar 5 ist verdrehfest auf der Vorgelegewelle 3 montiert, das Sekundärkegelscheibenpaar 7 auf einer Zwischenwelle 8. Mit der Antriebswelle 1 fest verbunden ist ein Stirnrad 9, das über ein Stirnrad 10 ein zur Zwischenwelle 8 koaxiales Losrad 11 treibt. Diese drei Zahnräder 9, 10, 11 bilden den mechanischen Leistungszweig des Leistungsverzweigungsgetriebes. Diese beiden Leistungszweige können in einem als Planetengetriebe 12 ausgebildeten Summierungsgetriebe wieder zusammengeführt werden. Das Sonnenrad 13 des Planetengetriebes 12 ist fest auf der Zwischenwelle 8 angebracht. Der Planetenträger 14 des Planetengetriebes 12 kann über eine Kupplung K1 mit dem Losrad 11 trieblich verbunden werden. Das Hohlrad 15 des Planetengetriebes 12 ist mit einer weiteren Zwischenwelle 16 über die Sekundärseite einer Kupplung K2 verbunden. Die Primärseite dieser Kupplung K2 ist auf der Zwischenwelle 8 angebracht. Damit können bei geöffneter Kupplung K1 die beiden Zwischenwellen 8 und 16 im direkten Durchtrieb verbunden werden. Die Zwischenwelle 16 ist über zwei Stirnräder 17, 18 bzw. drei Stirnräder 19, 20, 21 mit einer Doppelkupplung 2, die aus einer Kupplung K_{V} für Vorwärtsfahrt und einer Kupplung K_{R} für Rückwärtsfahrt besteht, trieblich verbunden. Diese Doppelkupplung 2 dient als Anfahr- und Reversiereinheit. Sie ist derart stark dimensioniert, daß für beliebig eingestellte Übersetzungen im ersten Fahrbereich der Anfahr- oder Reversiervorgang ausschließlich über eine Betätigung dieser Doppelkupplung 2 erfolgen kann, ohne daß dazu die Übersetzung verstellt werden muß. Abtriebseitig dieser Doppelkupplung 2 ist eine Kriechganggruppe 22 in Vorgelegebauweise angeordnet. Dabei ist die abtriebseitige Welle 23 der Doppelkupplung 2 mit einem Stirnrad 24 fest verbunden, das in ein Stirnrad 25 eingreift. Dieses Stirnrad 25 ist drehfest auf einer Hohlwelle 26 angebracht und mit einem auf einer Vorgelegewelle 27 des Kriechganggruppe 22 angeordneten Stirnrad 28 im Eingriff. Auf der selben Vorgelegewelle 27 ist ein Stirnrad 29 fest angebracht, das wiederum ein Losrad 30 treibt. Die Hohlwelle 26 und das Losrad 30 können wahlweise mit einer Abtriebswelle 31 gekuppelt werden. Ist die Hohlwelle 26 gekuppelt, so ist die Kriechganggruppe 22 in Durchtrieb geschaltet. Ist das Losrad 30 gekuppelt, so verläuft der Leistungsfluß über das Vorgelege der Kriechganggruppe 22. Der Kriechgang ist damit geschaltet. Die Abtriebswelle 31 ist über ein Kegelrad 32 mit einem Hinterraddifferential 33 und über ein Stirnräder 34 und 35 mit einer Zuschaltkupplung 36 für einen Vorderradantrieb verbunden.

Das Anfahren und Beschleunigen mit diesem stufenlosen Getriebe gestaltet sich folgendermaßen: Die Motordrehzahl wird auf einen vorgegebenen, verbrauchsoptimierten Wert eingestellt. Das Umschlingungsgetriebe 4 wird günstigerweise auf seine maximale Übersetzung eingestellt. Damit ergibt sich nach dem Summierungsgetriebe die minimale Übersetzung. Die Doppelkupplung 2 ist aber derart dimensioniert, daß zum Anfahren nicht notwendigerweise die minimale Übersetzung eingestellt werden muß. Die Kupplung K1 ist geschlossen und die Kupplung K2 offen. Je nach Fahrrichtung wird die Kupplung K_{V} für Vorwärtsfahrt oder Kupplung K_{R} für Rückwärtsfahrt mit Kraft beaufschlagt. Die maximale Übersetzung des Umschlingungsgetriebes 4 ist gerade so bemessen, daß bei geschlossender Kupplung und vorgegebener Motordrehzahl die Getriebeabtriebsdrehzahl einen geringen Wert aufweist. Dieser Wert liegt aber außerhalb des kritischen Bereichs um Null herum, in dem bei Leistungsverzweigungsgetrieben die Getriebeabtriebsdrehzahl sich schon bei minimalen Übersetzungsänderungen des Umschlingungsgetriebes prozentual sehr deutlich verändert. Das Sonnenrad 13 des Planetengetriebes 12 dreht dabei schneller als der Planetenträger 14, so daß sich die Planeten in zum Sonnenrad bzw. Planetenträger entgegengesetzer Richtung drehen. Die maximale Übersetzung des Umschlingungsgetriebes 4 und damit die Drehzahl des Sonnenrades 13 im Vergleich zu der des Planetenträgers 14 ist dabei - wie gesagt - so gewählt, daß sich das Hohlrad 15 sehr langsam in Richtung von Sonnenrad 13 und Planetenträger 14 dreht. Sobald beim Anfahrvorgang die Kupplung nicht mehr rutscht, wird die Übersetzung des Umschlingungsgetriebes 4 verkleinert. Damit verringert sich die Drehzahl des Sonnenrades 13, womit der Rückwärtslauf der Planetenräder verlangsamt wird. Dadurch erhöht sich die Drehzahl des Hohlrades 15, da die Umlaufgeschwindigkeit des Planetenträgers 14 konstant ist. Bei der minimalen Übersetzung des Umschlingungsgetriebes 4 dreht sich das Sonnenrad 13 und der Planetenträger 14 genau gleich schnell. Die Planetenräder stehen dabei still und das Hohlrad 15 dreht sich somit gleich schnell wie das Sonnenrad 13 und der Planetenträger 14, d. h. das Planetengetriebe 12 läuft als Block um. Dies ist die Bereichsgrenze des ersten Bereich des Getriebes, des Bereichs mit Leistungsverzweigung. Jetzt wird die Kupplung K1 geöffnet und die Kupplung K2 geschlossen. Der mechanische Leistungszweig ist damit nicht mehr trieblich mit dem Summierungsplanetengetriebe verbunden, d. h. die Stirnräder 9, 10 und 11 laufen lose mit. Die Kupplung K2 verbindet die Zwischenwellen 8 und 16 im direkten Durchtrieb. Der gesamte Leistungsfluß strömt über das Umschlingungsgetriebe 4. Das Übersetzungsverhältnis des Umschlingungsgetriebes 4 wird jetzt in diesem zweiten Bereich des Getriebes zur weiteren Beschleunigung von seinem minimalen Wert beginnend vergrößert. Findet dieses Getriebe Anwendung in landwirtschaftlichen Nutzfahrzeugen, so wird die Übersetzung sinnvollerweise so bemessen, daß der erste Bereich zum Fahren im Gelände (Ackergruppe) und der zweite zum Befahren von Zufahrtsstraßen (Straßengruppe) dient. Im ersten Getriebebereich (Ackergruppe), dem Bereich mit Leistungsverzweigung, ist für geringe Fahrgeschwindigkeiten die über das Umschlingungsgetriebe 4 zu übertragende Leistung größer als die gesamte Antriebsleistung. Dies ist der Bereich der sogenannten Blindleistung, die das Umschlingungsgetriebe 4 sehr belastet. Das Umschlingungsgetriebe 4 müßte demnach sehr stark bemessen aufgebaut sein. Das gesamte Getriebe ist aber erfindungsgemäß gerade derart ausgelegt, daß die Triebkraft der Antriebsräder in diesem Bereich der Blindleistung höher ist als die Haftreibungskraft. Damit limitiert die Haftreibungsgrenze zum Schlupfen der Räder die im Umschlingungsgetriebe 4 auftretende Blindleistung in der Weise, daß das Umschlingungsgetriebe 4 noch maßvoll dimensioniert werden kann. Die am häufigsten vorkommenden Fahrgeschwindigkeiten in der Ackergruppe liegen bei dieser Getriebedimensionierung gerade in einem Bereich, in dem der mechanische Zweig den größeren Anteil der Antriebsleistung überträgt. Da der mechanische Zweig im Vergleich zum Umschlingungsgetriebe 4 den besseren Wirkungsgrad aufweist, ist der Gesamtwirkungsgrad des Getriebes damit in diesem häufig angeforderten Geschwindigkeitsbereich sehr günstig.

Das Reversieren, beispielsweise beim Laden oder Stapeln, erfolgt durch eine gesteuerte oder geregelte Schaltung der Kupplungen K_{V} und K_{R}. Dazu muß das Getriebe nicht in der minimale Übersetzung eingestellt sein. Die Getriebeübersetzung wird auf einen für den jeweiligen Arbeitsgang günstigen Wert eingestellt. Das Reversieren wird dann alleine durch das Übertragungsmoment der Kupplungen K_{V} und K_{R} gesteuert oder geregelt.

### Bezugszeichenliste

- K_{V}: Kupplung für Vorwärtsfahrt
- K_{R}: Kupplung für Rückwärtsfahrt
- K1: Kupplung
- K2: Kupplung
- 1: Antriebswelle
- 2: Doppelkupplung
- 3: Vorgelegewelle
- 4: Umschlingungsgetriebe
- 5: Primärkegelscheibenpaar
- 6: Umschlingungsorgan
- 7: Sekundärkegelscheibenpaar
- 8: Zwischenwelle
- 9: Stirnrad
- 10: Stirnrad
- 11: Losrad
- 12: Planetengetriebe
- 13: Sonnenrad
- 14: Planetenträger
- 15: Hohlrad
- 16: Zwischenwelle
- 17: Stirnrad
- 18: Stirnrad
- 19: Stirnrad
- 20: Stirnrad
- 21: Stirnrad
- 22: Kriechganggruppe
- 23: Welle
- 24: Stirnrad
- 25: Stirnrad
- 26: Hohlwelle
- 27: Vorgelegewelle 27
- 28: Stirnrad
- 29: Stirnrad
- 30: Losrad
- 31: Abtriebswelle
- 32: Kegelrad
- 33: Hinterraddifferential
- 34: Stirnrad
- 35: Stirnrad
- 36: Zuschaltkupplung

## Patentansprüche

1. Stufenloses Getriebe mit zwei Fahrbereichen, mit
- einer Getriebeantriebswelle (1) und einer abtriebsseitigen Welle (23),
- einem mit der Getriebeantriebswelle (1) trieblich verbundenen Leistungszweig mit stufenlos regelbarer Drehzahl in Form eines Variators (4),
- einem mit der Getriebeantriebswelle (1) trieblich verbundenen mechanischen Leistungszweig,
- einem als Summierungsgetriebe wirkenden Planetengetriebe (12), welches zwei Eingänge und einen Ausgang aufweist und
- einer ersten und einer zweiten Kupplung (K1, K2) sowie einer Kupplung für Rückwärtsfahrt (KR),
- wobei im ersten Fahrbereich der stufenlos arbeitende Leistungszweig dem einen Eingang des Planetengetriebes und der mechanische Leistungszweig über die geschlossene erste Kupplung (K1) dem anderen Eingang des Planetengetriebes zugeführt werden und die summierte Leistung an den Ausgang des Planetengetriebes weitergeleitet wird,
- wobei im zweiten Fahrbereich bei geöffneter erster Kupplung (K1) und bei geschlossener zweiter Kupplung (K2) der vom Ausgang des Variators kommende Leistungszweig mit stufenlos regelbarer Drehzahl mit dem Ausgang des Planetengetriebes (12) verbunden ist,
dadurch **gekennzeichnet**, daß
- der Ausgang des Planetengetriebes (12) in beiden schaltbaren Fahrbereichen mit der abtriebsseitigen Welle (23) wahlweise über eine Kupplung (KV) für Vorwärtsfahrt und über die Kupplung (KR) für Rückwärtsfahrt verbindbar ist und
- die im Antriebsstrang nach dem Variator und dem mechanischen Leistungszweig angeordneten Kupplungen (KV und KR) als Doppelkupplung (2) ausgebildet sind, die als Anfahrkupplung und Reversiereinheit dient.

2. Stufenloses Getriebe nach Anspruch 1,
dadurch gekennzeichnet, daß
die Doppelkupplung derart stark dimensioniert ist, daß für beliebig eingestellte Übersetzungen im ersten Fahrbereich der Anfahr- oder Reversiervorgang ausschließlich über eine Betätigung dieser Doppelkupplung (2) erfolgen kann, ohne daß dazu die Übersetzung verstellt werden muß.

3. Stufenloses Getriebe nach Anspruch 1,
dadurch gekennzeichnet, daß
zwischen der Getriebeeingangswelle (1) und dem Variator eine Übersetzungsstufe ins Schnelle angeordnet ist.

4. Stufenloses Getriebe nach Anspruch 1,
dadurch gekennzeichnet, daß
der Variator als Umschlingungsgetriebe (4) ausgebildet ist.

5. Stufenloses Getriebe nach Anspruch 1,
dadurch gekennzeichnet, daß
der Variator als Reibradgetriebe ausgebildet ist.

6. Stufenloses Getriebe nach Anspruch 1,
dadurch gekennzeichnet, daß
es in land- und forstwirtschaftlichen Nutzfahrzeugen zur Anwendung kommt.

7. Stufenloses Getriebe nach Anspruch 1,
dadurch gekennzeichnet, daß
abtriebsseitig der Doppelkupplung (2) eine Kriechganggruppe in Vorgelegebauweise angeordnet ist.

8. Stufenloses Getriebe nach Anspruch 1,
dadurch gekennzeichnet, daß
die Übersetzung derart ausgelegt ist, daß der Gesamtgetriebewirkungsgrad im am häufigsten benutzten Geschwindigkeitsund Zugkraftbereich optimal ist.

9. Stufenloses Getriebe nach Anspruch 1,
dadurch gekennzeichnet, daß
die Getriebespreizung im Fahrbereich mit Leistungsverzweigung größer ist als die Variatorspreizung.

10. Verfahren zum Betrieb eines stufenlosen Getriebes nach Anspruch 1, dadurch **gekennzeichnet**, daß am Umschaltpunkt, an dem die erste Kupplung (K1) geschlossen und die zweite Kupplung (K2) geöffnet wird bzw. umgekehrt, Sonnenrad (13), Hohlrad (15) und Planetenträger (14) des Summierung-Planetengetriebes (12) synchron umlaufen.

11. Verfahren zum Betrieb eines stufenlosen Getriebes nach Anspruch 1, dadurch **gekennzeichnet**, daß das Anfahren durch gesteuertes oder geregeltes Schließen der Kupplung für Vorwärtsfahrt (KV) bzw. der Kupplung für Rückwärtsfahrt (KR) erfolgt.

12. Verfahren zum Betrieb eines stufenlosen Getriebes nach Anspruch 1, dadurch **gekennzeichnet**, daß das Reversieren durch eine gesteuerte oder geregelte Schaltung der Kupplungen für Vorwärtsfahrt und Ruckwärtsfahrt. (KV und KR) erfolgt.

13. Stufenloses Getriebe nach Anspruch 1, dadurch **gekennzeichnet**, daß alle rotierenden Bauteile über dem Ölsumpf angeordnet sind.

14. Stufenloses Getriebe nach Anspruch 1, dadurch **gekennzeichnet**, daß das Hydrauliköl für die Variatorverstellung und den Haltedruck der Kupplungen über eine sauggedrosselte Radialkolbenpumpe bereitgestellt wird.

15. Stufenloses Getriebe nach Anspruch 1,
dadurch gekennzeichnet, daß
die Schmierölversorgung über eine Innenzahnradpumpe erfolgt.

16. Stufenloses Getriebe nach Anspruch 1,
dadurch gekennzeichnet, daß
mechanische Drehmomentregler den Anpreßdruck im Variator regeln.

17. Stufenloses Getriebe nach Anspruch 1,
dadurch gekennzeichnet, daß
das Getriebegehäuse aus drei Gehäuseteilen einschließlich dem Hinterachsmittelteil besteht.

## Claims

1. Continuously variable transmission with two driving ranges, with
- a transmission input shaft (1) and a shaft (23) on the output side,
- a continuously variable-speed power transmission branch, which is in driving connection with the transmission input shaft (1), in the form of a variator (4),
- a mechanical power transmission branch in driving connection with the transmission input shaft (1),
- a planetary transmission (12) acting as compound transmission and having two inputs and one output, and
- a first and a second clutch (K1, K2) as well as a clutch (KR) for reverse drive,
- wherein, in the first driving range, the continuously variable power transmission branch is routed to one input of the planetary transmission and the mechanical power transmission branch to the other input of the planetary transmission via the engaged first clutch (K1), and the total power is transmitted to the output of the planetary transmission,
- wherein, in the second driving range, with the first clutch (K1) disengaged and the second clutch (K2) engaged, the continuously variable-speed power transmission branch coming from the output of the variator is connected to the output of the planetary transmission (12),
characterised in that
- the output of the planetary transmission (12) can be connected in both engageable driving ranges to the shaft (2) on the output side, optionally via a clutch (KV) for forward drive and via the clutch (KR) for reverse drive and
- the clutches (KV and KR) disposed after the variator and the mechanical power transmission branch in the drive train are formed as a twin clutch (2), which serves as a starting clutch and a reversing unit.

2. Continuously variable transmission according to Claim 1,
characterised in that
the twin clutch is dimensioned such that the starting or reversing operation can be effected just by operating this twin clutch (2), without the transmission ratio having to be adjusted for this, for transmission ratios set arbitrarily in the first driving range.

3. Continuously variable transmission according to Claim 1,
characterised in that
a speed-increasing stage is disposed between the transmission input shaft (1) and the variator.

4. Continuously variable transmission according to Claim 1,
characterised in that
the variator is formed as a wraparound transmission (4).

5. Continuously variable transmission according to Claim 1,
characterised in that
the variator is formed as a friction drive.

6. Continuously variable transmission according to Claim 1,
characterised in that
it is used in commercial vehicles for agriculture and forestry.

7. Continuously variable transmission according to Claim 1,
characterised in that
a creep speed group of countershaft design in disposed on the output side of the twin clutch (2).

8. Continuously variable transmission according to Claim 1,
characterised in that
the transmission ratio is selected such that the overall efficiency of the transmission is optimum in the most frequently used speed and traction range.

9. Continuously variable transmission according to Claim 1,
characterised in that
the transmission spread in the driving range with power transmission branching is greater than the variator spread.

10. Method for operating a continuously variable transmission according to Claim 1,
characterised in that
the sun gear (13), the ring gear (15) and the planet carrier (14) of the compound planetary transmission (12) rotate synchronously at the change-over point at which the first clutch (K1) is engaged and the second clutch (K2) is disengaged or vice versa.

11. Method for operating a continuously variable transmission according to Claim 1,
characterised in that
starting is effected by controlled or regulated engagement of the clutch (KV) for forward drive or the clutch (KR) for reverse drive.

12. Method for operating a continuously variable transmission according to Claim 1,
characterised in that
reversing is effected by controlled or regulated engagement of the clutches (KV and KR) for forward drive and reverse drive.

13. Continuously variable transmission according to Claim 1,
characterised in that
all rotating components are disposed above the oil sump.

14. Continuously variable transmission according to Claim 1,
characterised in that
the hydraulic oil for adjustment of the variator and the holding pressure of the clutches is provided by a suction-throttled radial piston pump.

15. Continuously variable transmission according to Claim 1,
characterised in that
the lubricating oil is supplied via an internal gear pump.

16. Continuously variable transmission according to Claim 1,
characterised in that
mechanical torque regulators regulate the contact pressure in the variator.

17. Continuously variable transmission according to Claim 1,
characterised in that
the transmission casing consists of three casing parts, including the rear axle middle part.

## Revendications

1. Transmission réglable en continu avec deux régimes de conduite, comprenant :
- un arbre d'entrée de transmission (1) et un arbre côté sortie (23),
- une branche de puissance à vitesse de rotation réglable en continu, sous la forme d'un variateur (4), reliée cinématiquement à l'arbre d'entrée de transmission (1),
- une branche de puissance mécanique reliée cinématiquement à l'arbre d'entrée de transmission (1),
- un train planétaire (12) jouant le rôle d'un mécanisme additionneur, qui présente deux entrées et une sortie et
- un premier et un deuxième embrayage (K1, K2) ainsi qu'un embrayage de marche arrière (KR),
- dans laquelle, dans le premier régime de conduite, la branche de puissance travaillant avec réglage en continu est reliée à une des entrées du train planétaire et la branche de puissance mécanique est reliée à l'autre entrée du train planétaire à travers le premier embrayage (K1) embrayé, et la puissance somme est reliée à la sortie du train planétaire,
- dans laquelle, dans le deuxième régime de conduite, lorsque le premier embrayage (K1) est débrayé et que le deuxième embrayage (K2) est embrayé, la branche de puissance provenant de la sortie du variateur avec une vitesse de rotation réglable en continu est reliée à la sortie du train planétaire (12),
**caractérisé** en ce que
- dans les deux régimes de conduite commutables, la sortie du train planétaire (12) peut être sélectivement reliée à l'arbre côté sortie (23) par l'intermédiaire d'un embrayage de marche avant (KV) ou par l'intermédiaire de l'embrayage de marche arrière (KR),
- les embrayages (KV et KR) montés dans la chaîne cinématique en aval du variateur et de la branche de puissance mécanique sont réalisés sous la forme d'un embrayage double (2) qui sert d'embrayage de démarrage et d'unité d'inversion.

2. Transmission réglable en continu selon la revendication 1,
caractérisée en ce que
l'embrayage double est calculé suffisamment fort pour que, pour les rapports quelconques établis dans le premier régime de conduite, l'opération de démarrage ou d'inversion peut être exécutée exclusivement par un actionnement de cet embrayage double (2), sans qu'il soit nécessaire pour cela de dérégler le rapport.

3. Transmission réglable en continu selon la revendication 1,
caractérisée en ce que
un étage multiplicateur est interposé entre l'arbre d'entrée de transmission (1) et le variateur.

4. Transmission réglable en continu selon la revendication 1,
caractérisée en ce que
le variateur est constitué par une transmission à courroie (4).

5. Transmission réglable en continu selon la revendication 1,
caractérisée en ce que
le variateur est constitué par une transmission à roues de friction.

6. Transmission réglable en continu selon la revendication 1,
caractérisée en ce que
elle est utilisée dans des véhicules utilitaires agricoles et forestiers.

7. Transmission réglable en continu selon la revendication 1,
caractérisée en ce que
un groupe de vitesses tout terrain du type de construction à arbre intermédiaire est disposé sur le côté sortie de l'embrayage double (2).

8. Transmission réglable en continu selon la revendication 1
caractérisée en ce que
le rapport est calculé de manière que le rendement global de la transmission soit optimal dans la gamme de vitesses et de forces de traction la plus fréquemment utilisée.

9. Transmission réglable en continu selon la revendication 1,
caractérisée en ce que
la plage des rapports de la transmission dans le régime de conduite avec ramification de la puissance est plus large que la plage des rapports du variateur.

10. Procédé d'utilisation d'une transmission réglable en continu selon la revendication 1, **caractérisé** en ce qu'au point de commutation auquel le premier embrayage (K1) est embrayé et le deuxième embrayage (K2) est débrayé, ou inversement, la roue planétaire (13), la couronne à denture intérieure (15) et le porte-satellites (14) du train planétaire additionneur (12) tournent en synchronisme.

11. Procédé d'utilisation d'une transmission réglable en continu selon la revendication 1, **caractérisé** en ce que le démarrage s'effectue par une manoeuvre d'embrayage commandée ou réglée de l'embrayage de marche avant (KV) ou de l'embrayage de marche arrière (KR).

12. Procédé d'utilisation d'une transmission réglable en continu selon la revendication 1, **caractérisé** en ce que l'inversion s'effectue par une commutation commandée ou réglée des embrayages de marche avant et de marche arrière (KV et KR).

13. Transmission réglable en continu selon la revendication 1, **caractérisée** en ce que toutes les pièces tournantes sont disposées au-dessus du carter d'huile.

14. Transmission réglable en continu selon la revendication 1, **caractérisée** en ce que l'huile hydraulique pour la manoeuvre du variateur et pour la pression de maintien des embrayages est fournie par une pompe à pistons radiaux étranglée sur le côté aspiration.

15. Transmission réglable en continu selon la revendication 1,
caractérisée en ce que
l'alimentation en huile lubrifiante s'effectue au moyen d'une pompe à engrenage intérieur.

16. Transmission réglable en continu selon la revendication 1,
caractérisée en ce que
des régulateurs de couple mécaniques règlent la pression de serrage du variateur.

17. Transmission réglable en continu selon la revendication 1,
caractérisée en ce que
le carter de la transmission est composé de trois parties de carter, y compris la partie centrale de l'essieu arrière.
